# EUROPEAN PATENT APPLICATION

(11) **EP 3 978 821 A1**
(43) Date of publication of application: **06.04.2022**
(21) Application number: 20813317.3
(22) Date of filing: 25.02.2020
(51) Int. Cl.: F24F 11/64, F25B 49/02, F24F 110/10, F24F 110/12, F24F 140/12

(54) **LOW-TEMPERATURE HEATING ACTIVATION CONTROL METHOD FOR AIR CONDITIONER, AND AIR CONDITIONER**

(30) Priority: 29.05.2019 CN 201910458431
(71) Applicant: Qingdao Haier Air-Conditioning Electronic Co., Ltd, Qingdao, Shandong 266101 (CN); Haier Smart Home Co., Ltd., Qingdao, Shandong 266101 (CN)
(72) Inventor: YANG, Kun, Qingdao, Shandong 266101 (CN); GAO, Zhiyang, Qingdao, Shandong 266101 (CN); LEI, Yanyao, Qingdao, Shandong 266101 (CN); MA, Yunhua, Qingdao, Shandong 266101 (CN); LI, Bin, Qingdao, Shandong 266101 (CN); ZHANG, Junhui, Qingdao, Shandong 266101 (CN); GE, Longling, Qingdao, Shandong 266101 (CN); SUI, Yabin, Qingdao, Shandong 266101 (CN)
(74) Representative: Høiberg P/S
(86) International application number: PCT/CN2020/076581
(87) International publication number: WO 2020/238298

(57) **Abstract**

A low-temperature heating activation control method for an air conditioner, applicable to a multi-split air-conditioning system. The method comprises the following steps: acquiring an outdoor ambient temperature, then determining whether the outdoor ambient temperature is lower than a configured outdoor ambient temperature; if the outdoor ambient temperature is lower than the configured outdoor ambient temperature, acquiring real-time gas return pressure of a compressor, then adjusting, according to the real-time gas return pressure of the compressor, the degree of opening of an expansion valve corresponding to each indoor unit in an ON state and the degree of opening of an expansion valve corresponding to each indoor unit in an OFF state; determining whether a first effective timing period has been reached; and if the first effective timing period has been reached, adjusting, according to a temperature difference between the configured temperature and a real-time indoor temperature, the degree of opening of the expansion valve corresponding to each indoor unit in the ON state. An air conditioner is also disclosed. The low-temperature heating activation control method for an air conditioner, and the air conditioner disclosed in the present invention effectively resolve the issue in which an action of a low-pressure switch during a heating operation performed at ultra-low temperatures by the multi-split air-conditioning system having a long distribution pipe causes the air conditioner to fail to operate normally.

## Description

### Technical field

The present invention relates to the technical field of air conditioning, particularly to a heating mode activation control method of air conditioner as being operated in low ambient temperature environment, and an air conditioner.

### Background

Multi-split air conditioning system refers to a refrigeration circulation system composed of an outdoor unit and a plurality of indoor units, which is a specific type of variable refrigerant air conditioning system. The multi-split air conditioning system consists of the outdoor unit and indoor units connecting to by refrigerant pipeline, wherein the outdoor unit is composed of an outdoor heat exchanger, a compressor and other accessories for refrigeration and the indoor unit is composed of a fan and an indoor exchanger. The outdoor unit could deliver refrigerant to each indoor unit through pipelines. Each indoor unit is equipped with an expansion valve. Cooling or heating load requirement could be timely satisfied by adjusting the refrigerant circulated by the compressor and by regulating the refrigerant flow into each indoor heat exchanger.

A high-pressure protection and a low-pressure protection are preset in a typical multi-spilt air conditioning system, respectively corresponding to a high pressure switch and a low pressure switch arranged therein. If pressure detected by either the high pressure switch or the low pressure switch exceeds permitted range, a warning signal is output to a controller; the controller further terminates the refrigerant system and enables the fault to be displayed. In a general sense, the low-pressure protection aims at preventing the compressor being damaged at a state that no refrigerant is circulated in the system and the high-pressure protection is designed for preventing the compressor being damaged or crack of pipeline in a condition that excessive refrigerant is circulated in the system or in case heat dissipation performance of the condenser becomes poor.

But when the multi-split air conditioning system is operating in an environment with an ultra-low ambient temperature, refrigerant may reside in every portion of the air conditioning system especially when only a part of indoor units are turned on because the length of pipeline between the outdoor unit and the indoor units is considerably longer than that of normal air conditioner likely resulting in a problem that gaseous refrigerant is not able return to a low-pressure end of the compressor. Under this circumstance the pressure of the system may be lower than a protection value preset to trigger the low-pressure protection result in the system is terminated.

### Summary

In order to solve the problem that a multi-split air conditioning system could not be properly activated due to the fact that the low pressure switch is triggered when being operated in an environment with ultra-low ambient temperature, the present invention provides a heating mode activation control method of air conditioner in low ambient temperature environment.

A heating mode activation control method of air conditioner in low ambient temperature environment, applied to a multi-split air conditioning system, the control method includes:
collecting outdoor ambient temperature and determining whether an outdoor ambient temperature obtained when the multi-split air conditioning system being activated is less than a preset outdoor ambient temperature;

if the outdoor ambient temperature obtained when the multi-split air conditioning system is activated is less than the preset outdoor ambient temperature, collecting a real-time return gas pressure of the compressor and respectively adjusting opening degree of each expansion valve corresponding to indoor units at switch-on state and opening degree of each expansion valve corresponding to indoor units at switch-off state according to the real-time return gas pressure of the compressor;
determining whether a first effective timing duration is reached; and
adjusting the opening degree of each expansion valve corresponding to the indoor units at switch-on state according to a temperature difference between a preset temperature and a real-time indoor ambient temperature if the first effective timing duration is reached.

Another aspect of the present invention provides an air conditioner, the air conditioner is a multi-split air conditioning system and the air conditioner includes:
a temperature acquisition module used to collect outdoor ambient temperature;
a first comparison module used to determine whether an outdoor ambient temperature obtained when the multi-split air conditioning system is activated is less than a preset outdoor ambient temperature;
a pressure acquisition module used to collect real-time return gas pressure of a compressor if the outdoor ambient temperature obtained when the multi-split air conditioning system is activated is less than the preset outdoor ambient temperature;
a first execution module used to respectively adjust opening degree of each expansion valve corresponding to indoor units at switch-on state and to adjust opening degree of each expansion valve corresponding to indoor units at switch-off state;
a timing module used to determine whether an action of the first execution module reaches a first effective timing duration; and
a second execution module used to adjust the opening degree of each expansion valve corresponding to the indoor units at switch-on state in accordance with a temperature difference between a preset temperature and a real-time indoor ambient temperature when the first effective timing duration is reached.

The heating mode activation control method of air conditioner in low ambient temperature environment and the air conditioner disclosed by the present invention does not only able to solve the problem that the multi-split air conditioning system with long pipeline could not properly function because the low pressure switch is triggered, but also able to keep using the low pressure switch to protect the compressor in the event of refrigerant leakage and the like to maintain the air conditioner being operated safely and normally. It has the advantages of good practicability and small hardware modification.

### Description of the drawings

In order to clearly explain embodiments of the present invention or technical solutions in the prior art, at first drawings related to description of the embodiments or the prior art will be briefly introduced as follows. It is obvious that the drawings are described here are part of embodiments of the present invention; for those ordinary skill in the art other drawings could be obtained based on these without any creative work.
Fig.1 is a schematic diagram of a refrigeration cycle of a multi-split air conditioner;
Fig.2 is a flow chart showing a heating mode activation control method of air conditioner in low ambient temperature environment according to one aspect of the present invention;
Fig.3 is a flow chart of an embodiment to adjust opening of an expansion valve according to a real-time return gas pressure of a compressor;
Fig.4 is a flow chart of another embodiment to adjust opening of an expansion valve according to a real-time return gas pressure of a compressor;
Fig.5 is a flow chart of another embodiment to adjust opening of an expansion valve according to a real-time return gas pressure of a compressor;

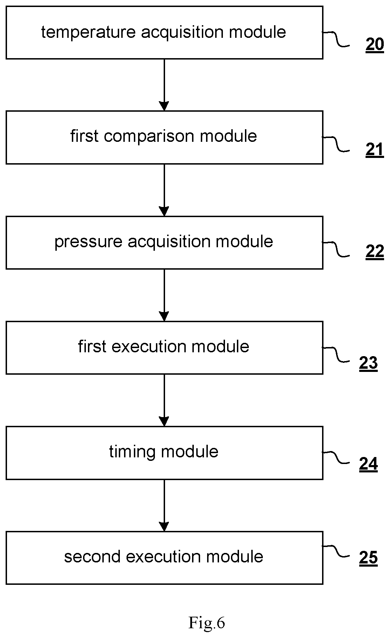

Fig.6 is a schematic diagram of an air conditioner according to another aspect of the present invention.

### Detailed Description of Embodiments

In order to give a full explanation of the objectives, technical solutions and advantages of embodiments of the present invention, the technical solutions disclosed by the present embodiments will be clearly and completely described based on the accompanying drawings. It should be noted that the present invention is not limited to the following embodiments, but various modifications could be made thereto by those of ordinary skill in the art without creative work within a scope of the present invention.

Terms "first", "second", "third" and the like in the specification, claims and drawings in the present invention are used to distinguish different objects, rather than to describe a specific order. In addition, terms "including", "having" and their variations are not exclusive; such as a process or a method that includes a series of steps, or a system, a product or a device that includes a plurality of units is not restricted to the steps or the units concerned, but optionally further includes steps or units not listed, or optionally includes other inherent steps or units of the process, the method, the product or the device.

"Embodiment" in the present invention means that specific features, structures or properties described in one embodiment could be included in one or more embodiments. The term in various positions of the specification does not necessarily refer to one same embodiment, nor is it an independent embodiment or an alternative embodiment mutually exclusive with other embodiments. Those skilled in the art could understand that the embodiments described could be combined with other embodiments.

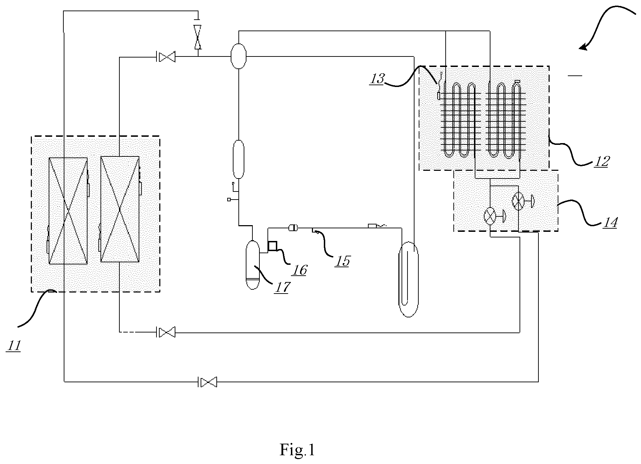

It should be noted that a heating mode referred to in the present embodiment of the invention indicates an operating mode of a multi-split air conditioning system. When the multi-split air conditioning system is operating in the heating mode, refrigerant flowing in indoor units at switch-on state or at switch-off state could be controlled respectively. The multi-split air conditioning system is shown in Fig.1, in which each indoor unit, no matter at switch-on state or at switch-off state, is provided with an expansion valve 14. Opening degree of each expansion valve 14 could be adjusted by a controller: the controller drives a four-phase pulse step motor with a permanent magnet rotor capable of rotating under magnetic forces exerted by being attracted and being repulsed by magnetic poles energized by stator windings; a sequence of pulse commands according to pre-established logic is given by the controller to apply pulse voltage on the stator windings of the motor to drive the rotor; if a direction indicated by the sequence of pulse commands is reverse, the motor rotates reversely; therefore the direction indicated by the sequence of pulse commands could control the rotate direction of the step motor, so as to further make the piston of the expansion valve move along a linear direction to change the opening degree of the valve and adjust refrigerant flow by commands. The number of pulse commands, also called the number of steps, could be regarded as a control unit as adjusting the opening of expansion valve; the adjustable range of opening degree is usually a range of steps. Each expansion valve is maintained at a fixed opening degree, neither fully opened nor fully closed, in a multi-split air conditioning system being powered but not turned on.

A typical multi-split air conditioning system is provided with pressure controllers including a low pressure switch 15, as shown in Fig.1, and a high pressure switch, which are also called a low pressure controller or a high pressure controller. Both of the low pressure controller and the high pressure controller are electrical switches being controlled based on pressure signals. If the discharge pressure of a compressor 17 exceeds a permitted value as operated, windings in the motor of the compressor might be burned and discharge diaphragm of the compressor might be damaged, so the high pressure switch, such as a high-pressure relay, is activated to immediately cut off power supply of the motor of the compressor to terminate its operation if the discharge pressure of the compressor exceeds a given value. However if the suction pressure of the compressor 17, namely the return pressure, is lower than a preset operating pressure, risky factors to the refrigeration system also could be brought in, such as the motor might be burnt. The low-pressure switch 15 is used to maintain the suction pressure of the compressor above the safe pressure value. However when the multi-split air conditioning system is operating in a low ambient temperature environment, especially in an ultra-low ambient temperature environment, the outdoor ambient temperature may be lower than the saturation temperature of the refrigerant and consequently more gaseous refrigerant but less liquid refrigerant circulated in the pipeline of the refrigeration system; and refrigerant may reside in every portion of the refrigerant system when the multi-split air conditioning system in a standby state due to the length of its pipeline between the outdoor unit and the indoor units is considerably longer than that of normal air conditioner, typically over 50 meters, under this circumstance if only part of indoor units are turned on, especially one indoor unit is merely turned on, refrigerant is inclined to flow to the other indoor units and lingers, therefore gaseous refrigerant could not return to the low-pressure end of the compressor and the pressure of the entire system is significantly lowered. But the low pressure phenomenon in this state is different from those caused by expansion valves being blocked by dirt or ice because it will get better as the air conditioner running during which there will be more and more refrigerant turning to gaseous status, it will not cause irreversible damage to the compressor. However due to the fact that the low pressure switch is triggered, the multi-split air conditioning system still could not properly function. In order to overcome this problem, a control method for air conditioner is disclosed by the present embodiment.

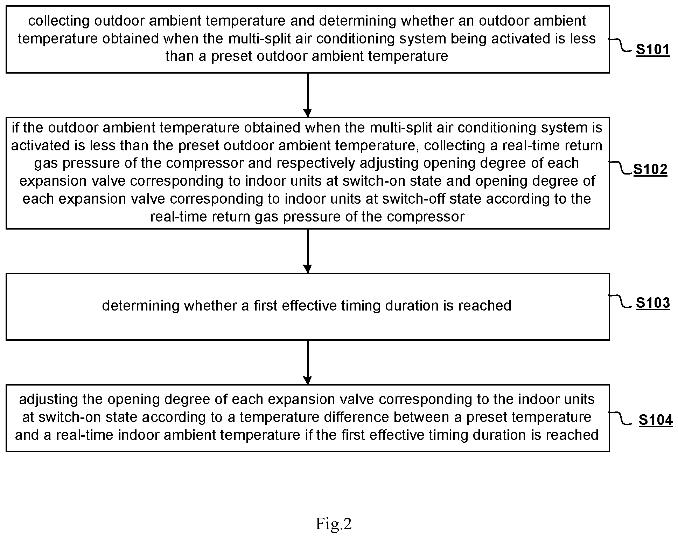

Fig.2 is a flowchart showing a heating mode activation control method of air conditioner in low ambient temperature environment according to one aspect of the present invention. As shown in Fig.2, the method includes the following steps.

Step S101: collecting outdoor ambient temperature at the start and determining whether an outdoor ambient temperature as the multi-split air conditioning system being activated is less than a preset outdoor ambient temperature. The outdoor ambient temperature could be obtained by an outdoor temperature sensor 13 (as shown in Fig.1) which is arranged on an outdoor heat exchanger according to a preset sampling frequency and directly sent to an I/O port of the controller. The outdoor ambient temperature also could be collected by temperature sensors arranged in the open air and transmitted to the controller through different communications methods, such as wired communication or wireless communication. Taking wireless communication as an example, the temperature sensor and the controller could communicate with each other in a one-to-one mode, or through one or more servers in a local area network, or through a cloud server. It is further determined whether the outdoor ambient temperature as the multi-split air conditioning system being activated is less than the preset outdoor ambient temperature. The preset outdoor ambient temperature could be pre-established according to the saturation temperature of different types of refrigerants, generally in a range from -10°C to -25°C representing an environmental condition in which a failure to start is prone to occur.

Step S102: if the outdoor ambient temperature obtained when the multi-split air conditioning system is activated is less than the preset outdoor ambient temperature, it is determined that the multi-split air conditioning system is working in an environment with ultra-low ambient temperature. A control process is executed further to avoid the activation failure and in the meanwhile to keep the multi-split air conditioning system being normally operated, which specifically includes: collecting a real-time return gas pressure of the compressor, which is obtained by a pressure sensor 16 (as shown in Fig.1) disposed at a suction port of the compressor according to a preset sampling frequency, by the controller. The controller further respectively adjusts opening degree of each expansion valve corresponding to indoor units at switch-on state and opening degree of each expansion valve corresponding to indoor units at switch-off state according to the real-time return gas pressure of the compressor. Due to the arrangement that each indoor unit corresponds to one expansion valve, refrigerant in pipeline of the multi-split air conditioning system in the ultra-low ambient temperature environment is redistributed; in this regard, the accumulation of refrigeration within the indoor units at switch-off state could be avoided and the pressure of refrigerant in pipeline is maintained above a safe value to ensure the multi-split air conditioning system could be activated normally and being safely operated.

Step S103: starting timing while executing the control process as described above and determining whether a timing time reaches a first effective timing duration to ensure the indoor units at switch-on state could maintain a normal heating operation.

Step S104: when the timing time reaches the first effective timing duration, opening degree of each expansion valve corresponding to indoor units at switch-on state is adjusted in accordance with a temperature difference between a preset temperature and a real-time indoor temperature and the multi-split air conditioning is operated normally. The first effective timing duration could be obtained by a sequence of tests under a condition that the indoor units are normally operated, which represents an average activation time when the multi-split air conditioning system is normally activated. In the present embodiment the first effective timing duration is preferably set as 1 minute. The arrangement that the first effective timing duration is pre-established for determining whether an activation process is finished could develop response efficiency of the control system, and to make response from components in the refrigeration system faster and more accurate.

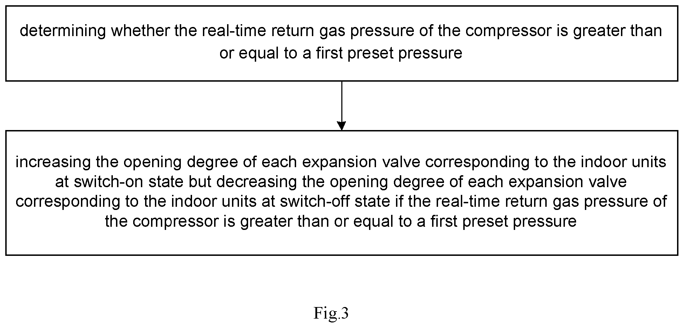

To be specific, as shown in Fig.3, the process that respectively adjusting opening degree of each expansion valve corresponding to indoor units at switch-on state and opening degree of each expansion valve corresponding to indoor units at switch-off state according to the real-time return gas pressure of the compressor includes steps as follows.

Firstly, determining whether the real-time return gas pressure of the compressor is greater than or equal to a first preset pressure which is greater than or equal to a threshold pressure triggering the action of the low pressure switch; generally such that the threshold pressure triggering the action of the low pressure switch is 0.5MPa, and taking the first preset pressure is 0.5MPa as an example.

When the real-time return gas pressure of the compressor is greater than or equal to the first preset pressure, if users switch on a small part of the indoor units, especially only one indoor unit in the multi-split air conditioning system, the pressure of the multi-split air conditioning system may further decrease. Due to the difference between the real-time return gas pressure of the compressor and the first preset pressure is comparatively small, even equal to the first preset pressure, it is very likely than the low pressure switch is triggered before the gaseous refrigerant increases. In order to avoid this situation, in the present embodiment, it is preferable to increase opening degree of each expansion valve corresponding to indoor units at switch-on state while to decrease opening degree of each expansion valve corresponding to indoor units at switch-off state, so as to prevent that the pressure at the suction port of the compressor is lower than the protection pressure.

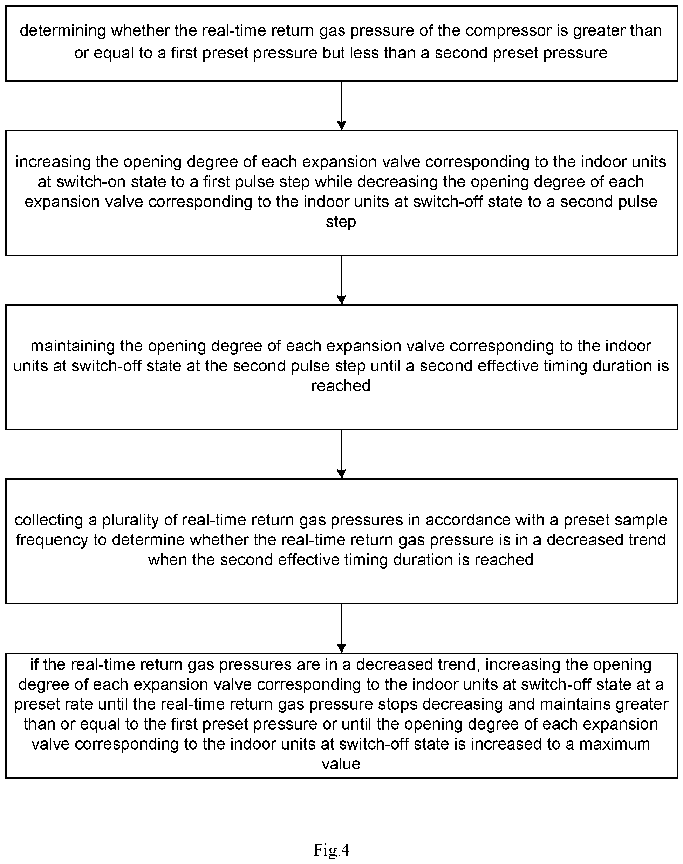

Fig.4 shows a more precise control method, wherein the process that respectively adjusting opening degree of each expansion valve corresponding to indoor units at switch-on state and opening degree of each expansion valve corresponding to indoor units at switch-off state according to the real-time return gas pressure of the compressor includes steps as follows.

Determining whether the real-time return gas pressure is greater than or equal to the first preset pressure but is less than a second preset pressure, wherein the first preset pressure could be preferably set as 0.05MPa and the second preset pressure could be preferably set as 0.1MPa; this step aims at determining whether the real-time return gas pressure of the compressor is in a comparatively critical state that a deviation from the protection pressure is small. If the real-time return gas pressure is in the critical state, namely the real-time return gas pressure is greater than or equal to the first preset pressure but is less than the second preset pressure, the opening degree of each expansion valve corresponding to the indoor units at switch-on state is increased to a first pulse step while the opening degree of each expansion valve corresponding to the indoor units at switch-off state is decreased to a second pulse step, wherein the first pulse step is preferably 200 pls and the second pulse step is 50 pls.

Maintaining the opening degree of each expansion valve corresponding to the indoor units at switch-off state at the second pulse step until a second effective timing duration is reached at that time the multi-split air conditioning system is relatively stable. A preferred value of the second effective timing duration is 30s.

When the second effective timing duration is reached, collecting a plurality of real-time return gas pressures in accordance with a preset sample frequency to determine whether the real-time return gas pressure is in a decreased trend. As an example, three consecutive real-time return gas pressures are collected for comparison to determine whether the real-time return gas pressure is in a decreased trend. If the real-time return gas pressures are in a decreased trend, the opening degree of each expansion valve corresponding to the indoor units at switch-off state is increased at a preset rate until the real-time return gas pressure stops decreasing and maintains greater than or equal to the first preset pressure, in another word at a safe state, or until the opening degree of each expansion valve corresponding to the indoor units at switch-off state is increased to the maximum value. This step is to ensure the multi-split air conditioning system could keep stable as being activated without triggering the low-pressure switch by adjusting the opening degree of each expansion valve corresponding to the indoor units at switch-off state to compensate pressure loss. In the present embodiment, a group of preferred values are provided: for every 0.01MPa decrease in the real-time return gas pressure of the compressor, the opening degree of the expansion valve increases by 100 pls; the maximum opening degree is 460 pls.

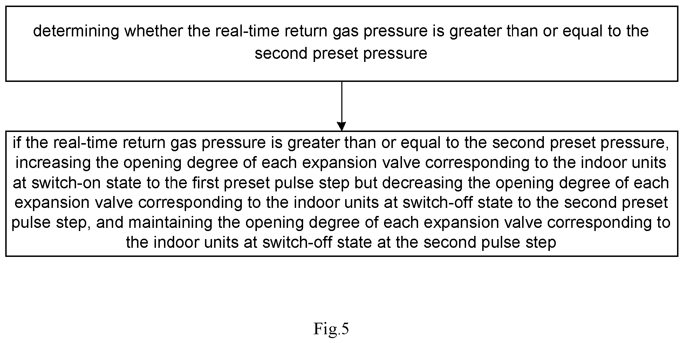

Further, as shown in Fig.5, the process that respectively adjusting opening degree of each expansion valve corresponding to indoor units at switch-on state and opening degree of each expansion valve corresponding to indoor units at switch-off state according to the real-time return gas pressure of the compressor includes steps as follows.

Determining whether the real-time return gas pressure is greater than or equal to the second preset pressure, wherein the second preset pressure could also be preferably set as 0.1MPa; this step aims at determining whether the real-time return gas pressure of the compressor is in a comparatively safe state that a deviation from the protection pressure is great. If the real-time return gas pressure is in the safe state, namely the real-time return gas pressure is greater than or equal to the second preset pressure, the opening degree of each expansion valve corresponding to the indoor units at switch-on state is increased to the first preset pulse step and the opening degree of each expansion valve corresponding to the indoor units at switch-off state is decreased to the second preset pulse step, wherein the first pulse step is preferably 200 pls and the second pulse step is 50 pls. Maintaining the opening degree of each expansion valve corresponding to the indoor units at switch-off state at the second pulse step to ensure the refrigerant flow in the system stable and the activation smoothly passed.

The control method provided in the foregoing embodiments is particularly suitable for a case where only one indoor unit is being switched on by users.

The heating mode activation control method of air conditioner in low ambient temperature environment disclosed by the present invention does not only able to solve the problem that the multi-split air conditioning system with long pipeline could not properly function because the low pressure switch is triggered, but also able to keep using the low pressure switch to protect the compressor in the event of refrigerant leakage and the like to maintain the air conditioner being operated safely and normally. It has the advantages of good practicability and small hardware modification.

The present invention further discloses an air conditioner, as shown in the drawings, which includes the following parts.

A temperature acquisition module 20 is used to collect outdoor ambient temperature.

A first comparison module 21 is used to determine whether an outdoor ambient temperature obtained when the multi-split air conditioning system is activated is less than a preset outdoor ambient temperature.

In the embodiment of the present invention, the temperature acquisition module and the first comparison module could be configured to execute the Step S101 as mentioned in the method embodiment above.

A pressure acquisition module 22 is used to collect real-time return gas pressure of the compressor if the outdoor ambient temperature obtained when the multi-split air conditioning system is activated is less than the preset outdoor ambient temperature.

A first execution module 23 is used to respectively adjust opening degree of each expansion valve corresponding to indoor units at switch-on state, and to adjust opening degree of each expansion valve corresponding to indoor units at switch-off state.

In the embodiment of the present invention, the pressure acquisition module and the first execution module could be configured to execute the Step S102 as mentioned in the method embodiment above.

A timing module 24 is used to determine whether an action of the first execution module reaches a first effective timing duration.

In the embodiment of the present invention, the timing module could be configured to execute the Step S103 as mentioned in the method embodiment above.

A second execution module 25 is used to adjust opening degree of each expansion valve corresponding to the indoor units at switch-on state in accordance with a temperature difference between a preset temperature and a real-time indoor ambient temperature when the first effective timing duration is reached.

In the embodiment of the present invention, the second execution module could be configured to execute the Step S 104 as mentioned in the method embodiment above.

Optionally the air conditioner further includes a first calculation module used to determine whether the real-time return gas pressure of the compressor is greater than or equal to a first preset pressure. If it is determined by the first calculation module that the real-time return gas pressure is greater than or equal to the first preset pressure, the first execution module is configured to increase the opening degree of each expansion valve corresponding to the indoor units at switch-on state and also configured to decrease the opening degree of each expansion valve corresponding to the indoor units at switch-off state; wherein the first preset pressure is greater than or equal to a preset action pressure to trigger a low pressure switch.

Optionally the air conditioner further includes a second calculation module used to determine whether the real-time return gas pressure of the compressor is greater than or equal to the first preset pressure but less than a second preset pressure.

If it is determined by the second calculation module that the real-time return gas pressure of the compressor is greater than or equal to the first preset pressure but less than the second preset pressure, the first execution module is configured to increase the opening degree of each expansion valve corresponding to the indoor units at switch-on state to a first pulse step and also configured to decrease the opening degree of each expansion valve corresponding to the indoor units at switch-off state to a second pulse step; and in the meanwhile the timing module is further configured to determine whether the action of the first execution module reaches a second effective timing duration.

The air conditioner further includes a monitor module configured to determine whether the real-time return gas pressure of the compressor is in a decreased trend by collecting a plurality of real-time return gas pressures in accordance with a preset sample frequency when it is determined by the timing module that the action of the first execution module reaches the second effective timing duration.

The air conditioner further includes a third execution module configured to increase the opening degree of each expansion valve corresponding to the indoor units at switch-off state to a maximum opening degree at a preset rate when the real-time return gas pressure of the compressor is in a decreased trend

Optionally, the second calculation module is also used to determine whether the real-time return gas pressure of the compressor is greater than or equal to the second preset pressure.

If it is determined by the second calculation module that the real-time return gas pressure of the compressor is greater than or equal to the second preset pressure, the first execution module is configured to increase the opening degree of each expansion valve corresponding to the indoor units at switch-on state to the first pulse step, and also configured to decrease the opening degree of each expansion valve corresponding to the indoor units at switch-off state to the second pulse step and maintain the opening degree of each expansion valve corresponding to the indoor units at switch-off state at the second pulse step.

Optionally the air conditioner further includes a setting module used to set that only one indoor unit is activated.

The air conditioner disclosed by the present invention does not only able to solve the problem that the multi-split air conditioning system with long pipeline could not properly function because the low pressure switch is triggered, but also able to maintain the air conditioner being operated safely and normally.

An embodiment of the present application also provides a computer storage medium, wherein the computer storage medium is stored in a computer program for electronic data exchange, and the computer program enables the air conditioner to perform part or all of the steps of any method described in the above method embodiment.

In the above-mentioned embodiments, the description of each embodiment has its own emphasis. For parts that are not described in detail in an embodiment, reference may be made to related descriptions of other embodiments.

In the several embodiments provided in this application, it should be understood that the disclosed device may be implemented in other ways. For example, the device embodiments described above are merely illustrative: the division of the above-mentioned units or modules is only a logical function division. In actual implementation, there may be other division methods, for example, multiple units or components may be combined or integrated into another system, or some features can be ignored or not implemented. In addition, the displayed or discussed mutual coupling or direct coupling or communication connection may be indirect coupling or communication connection through some interfaces, devices or units, and may be in electrical or other forms.

The units described above as separate components may or may not be physically separated, and the components displayed as units may or may not be physical units, that is to say, they may be located in one physical space, or they may be distributed on multiple network units. Some or all of the units may be selected according to practical requirements to achieve the objectives of the solutions of the embodiments.

In addition, the functional units in the various embodiments of the present application may be integrated into one processing unit, or each unit may exist alone physically, or two or more units may be integrated into one unit. The above-mentioned integrated unit can be implemented in the form of hardware or software functional unit.

Finally, it should be noted that the above embodiments are only used to illustrate the technical solutions of the present invention, not to limit it; although the present invention has been described in detail with reference to the foregoing embodiments, those of ordinary skill in the art should understand that: The technical solutions recorded in the foregoing embodiments are modified, or some of the technical features are equivalently replaced; these modifications or replacements do not cause the essence of the corresponding technical solutions to deviate from the spirit and scope of the technical solutions of the embodiments of the present invention.

## Claims

1. A heating mode activation control method of air conditioner in low ambient temperature environment, applied to a multi-split air conditioning system, **characterized in that** the control method includes:
collecting outdoor ambient temperature and determining whether an outdoor ambient temperature obtained when the multi-split air conditioning system being activated is less than a preset outdoor ambient temperature;
if the outdoor ambient temperature obtained when the multi-split air conditioning system is activated is less than the preset outdoor ambient temperature, collecting a real-time return gas pressure of the compressor and respectively adjusting opening degree of each expansion valve corresponding to indoor units at switch-on state and opening degree of each expansion valve corresponding to indoor units at switch-off state according to the real-time return gas pressure of the compressor;
determining whether a first effective timing duration is reached; and
adjusting the opening degree of each expansion valve corresponding to the indoor units at switch-on state according to a temperature difference between a preset temperature and a real-time indoor ambient temperature if the first effective timing duration is reached.

2. The heating mode activation control method of air conditioner in low ambient temperature environment according to claim 1, **characterized in that** the step that respectively adjusting opening degree of each expansion valve corresponding to indoor units at switch-on state and opening degree of each expansion valve corresponding to indoor units at switch-off state according to the real-time return gas pressure of the compressor further includes:
determining whether the real-time return gas pressure of the compressor is greater than or equal to a first preset pressure; and
increasing the opening degree of each expansion valve corresponding to the indoor units at switch-on state but decreasing the opening degree of each expansion valve corresponding to the indoor units at switch-off state if the real-time return gas pressure of the compressor is greater than or equal to a first preset pressure;
wherein the first preset pressure is greater than or equal to a preset action pressure to trigger a low pressure switch.

3. The heating mode activation control method of air conditioner in low ambient temperature environment according to claim 2, **characterized in that** the step that respectively adjusting opening degree of each expansion valve corresponding to indoor units at switch-on state and opening degree of each expansion valve corresponding to indoor units at switch-off state according to the real-time return gas pressure of the compressor further includes:
determining whether the real-time return gas pressure of the compressor is greater than or equal to a first preset pressure but less than a second preset pressure;
increasing the opening degree of each expansion valve corresponding to the indoor units at switch-on state to a first pulse step while decreasing the opening degree of each expansion valve corresponding to the indoor units at switch-off state to a second pulse step;
maintaining the opening degree of each expansion valve corresponding to the indoor units at switch-off state at the second pulse step until a second effective timing duration is reached;
collecting a plurality of real-time return gas pressures in accordance with a preset sample frequency to determine whether the real-time return gas pressure is in a decreased trend when the second effective timing duration is reached;
if the real-time return gas pressures are in a decreased trend, increasing the opening degree of each expansion valve corresponding to the indoor units at switch-off state at a preset rate until the real-time return gas pressure stops decreasing and maintains greater than or equal to the first preset pressure or until the opening degree of each expansion valve corresponding to the indoor units at switch-off state is increased to a maximum value.

4. The heating mode activation control method of air conditioner in low ambient temperature environment according to claim 3, **characterized in that** the step that respectively adjusting opening degree of each expansion valve corresponding to indoor units at switch-on state and opening degree of each expansion valve corresponding to indoor units at switch-off state according to the real-time return gas pressure of the compressor further includes:
determining whether the real-time return gas pressure is greater than or equal to the second preset pressure;
if the real-time return gas pressure is greater than or equal to the second preset pressure, increasing the opening degree of each expansion valve corresponding to the indoor units at switch-on state to the first preset pulse step but decreasing the opening degree of each expansion valve corresponding to the indoor units at switch-off state to the second preset pulse step, and maintaining the opening degree of each expansion valve corresponding to the indoor units at switch-off state at the second pulse step.

5. The heating mode activation control method of air conditioner in low ambient temperature environment according to claim 4, **characterized in that** only one indoor unit is at switch-on state.

6. An air conditioner, wherein the air conditioner is a multi-split air conditioning system, **characterized in that** the air conditioner includes:
a temperature acquisition module used to collect outdoor ambient temperature;
a first comparison module used to determine whether an outdoor ambient temperature obtained when the multi-split air conditioning system is activated is less than a preset outdoor ambient temperature;
a pressure acquisition module used to collect real-time return gas pressure of a compressor if the outdoor ambient temperature obtained when the multi-split air conditioning system is activated is less than the preset outdoor ambient temperature;
a first execution module used to respectively adjust opening degree of each expansion valve corresponding to indoor units at switch-on state and to adjust opening degree of each expansion valve corresponding to indoor units at switch-off state;
a timing module used to determine whether an action of the first execution module reaches a first effective timing duration; and
a second execution module used to adjust the opening degree of each expansion valve corresponding to the indoor units at switch-on state in accordance with a temperature difference between a preset temperature and a real-time indoor ambient temperature when the first effective timing duration is reached.

7. The air conditioner according to claim 6, **characterized in that** further includes:
a first calculation module used to determine whether the real-time return gas pressure of the compressor is greater than or equal to a first preset pressure;
if it is determined by the first calculation module that the real-time return gas pressure is greater than or equal to the first preset pressure, the first execution module is configured to increase the opening degree of each expansion valve corresponding to the indoor units at switch-on state and also configured to decrease the opening degree of each expansion valve corresponding to the indoor units at switch-off state;
wherein the first preset pressure is greater than or equal to a preset action pressure to trigger a low pressure switch.

8. The air conditioner according to claim 7, **characterized in that** further includes:
a second calculation module used to determine whether the real-time return gas pressure of the compressor is greater than or equal to the first preset pressure but less than a second preset pressure;
if it is determined by the second calculation module that the real-time return gas pressure of the compressor is greater than or equal to the first preset pressure but less than the second preset pressure, the first execution module is configured to increase the opening degree of each expansion valve corresponding to the indoor units at switch-on state to a first pulse step and also configured to decrease the opening degree of each expansion valve corresponding to the indoor units at switch-off state to a second pulse step; and in the meanwhile the timing module is further configured to determine whether the action of the first execution module reaches a second effective timing duration;
a monitor module configured to determine whether the real-time return gas pressure of the compressor is in a decreased trend by collecting a plurality of real-time return gas pressures in accordance with a preset sample frequency when it is determined by the timing module that the action of the first execution module reaches the second effective timing duration; and
a third execution module configured to increase the opening degree of each expansion valve corresponding to the indoor units at switch-off state to a maximum opening degree at a preset rate when the real-time return gas pressure of the compressor is in a decreased trend.

9. The air conditioner according to claim 8, **characterized in that** the second calculation module is further used to determine whether the real-time return gas pressure of the compressor is greater than or equal to the second preset pressure;
if it is determined by the second calculation module that the real-time return gas pressure of the compressor is greater than or equal to the second preset pressure, the first execution module is configured to increase the opening degree of each expansion valve corresponding to the indoor units at switch-on state to the first pulse step, and also configured to decrease the opening degree of each expansion valve corresponding to the indoor units at switch-off state to the second pulse step and maintain the opening degree of each expansion valve corresponding to the indoor units at switch-off state at the second pulse step.

10. The air conditioner according to claim 9, **characterized in that** further includes:
a setting module used to set that only one indoor unit is activated.
